# EUROPEAN PATENT APPLICATION

(11) **EP 2 224 387 A1**
(43) Date of publication of application: **01.09.2010**
(21) Application number: 09154027.8
(22) Date of filing: 27.02.2009
(51) Int. Cl.: G06Q 10/00

(54) **Electronic device and method of managing calendar event records**

(71) Applicant: RESEARCH IN MOTION LIMITED, Waterloo, Ontario N2L 3W8 (CA)
(72) Inventor: Martin, Daryl, Waterloo Ontario N2L 5Z5 (CA); Godfrey, James, Waterloo Ontario N2L 5Z5 (CA); Wilson, J F Sean, Waterloo Ontario N2L 5Z5 (CA)
(74) Representative: Rickard, David John

(57) **Abstract**

A computer-implemented method of managing calendar event records at a database includes detecting a change to a distribution list, the change associated with at least one affected list member, determining ones of the calendar event records to which the distribution list is invited, and sending a respective calendar event update message to each of the at least one affected list member for each of the ones of the calendar event records.

## Description

### TECHNICAL FIELD

The present application relates to electronic devices with calendaring functionality for tracking and managing calendar events such as appointments and meetings and for managing invitations for such events.

### BACKGROUND DISCUSSION

Electronic devices, including portable electronic devices, have gained widespread use and can provide a variety of functions including, for example, telephonic, electronic messaging and other personal information manager (PIM) application functions. Portable electronic devices can include several types of devices for communication including mobile stations such as simple cellular telephones, smart telephones and wireless PDAs. These devices run on a wide variety of networks from data-only networks such as Mobitex and DataTAC to complex voice and data networks such as GSM/GPRS, CDMA, EDGE, UMTS and CDMA2000 networks.

Many portable electronic devices include a variety of applications for performing calendar and meeting-related functions, email functions, telephone functions, short message service (SMS) functions, Web browser functions and address book functions. Calendar applications allow users to store calendar event records for tracking and managing appointments and meetings and to set reminders for such appointments and meetings and reminders can be provided prior to the start time for the calendar event record. Invitations for meetings, for example, can also be sent for storing calendar event records at the electronic devices of invitees. Further, recurring events can be set once and invitations for such recurring events can be sent when the calendar event record is stored for providing reminders for each occurrence of the recurring event.

When an addition of invitees is desired, the schedulers of the meeting or meetings must be made aware of the addition and retrieve each of the meetings for the addition of the invitee. This is particularly problematic in cases in which a calendar event is scheduled long in advance or is a recurring event as the addition of the invitee may be overlooked or the scheduler must search for each appropriate meeting to which to add the invitee.

Improvements in managing calendar event records are therefore desirable.

### SUMMARY

In a first aspect, there is provided a method of managing calendar event records at a database. The method includes detecting a change to a distribution list, the change associated with at least one affected list member, determining ones of the calendar event records to which the distribution list is invited, and sending a respective calendar event update message to each of the at least one affected list member for each of the ones of the calendar event records.

In another aspect there is provided a computer-implemented method of managing calendar event records at a database, the method comprising: detecting a change to a distribution list, said change associated with at least one affected list member; determining ones of the calendar event records to which the distribution list is invited; and sending a respective calendar event update message to each of the at least one affected list member for each of the ones of the calendar event records.

In another aspect there is provided an electronic device that includes an input device, a memory device, and functional components including a processor connected to the memory device and the input device for executing a program stored in the memory to cause the electronic device to detect a change to a distribution list, the change associated with at least one affected list member, determine ones of calendar event records to which the distribution list is invited, and send a respective calendar event update message to each of the at least one affected list member for each of the ones of the calendar event records.

In still another aspect, there is provided a computer readable medium having computer-readable code embodied therein for execution by a processor at an electronic device for detecting a change to a distribution list, the change associated with at least one affected list member, determining ones of calendar event records to which the distribution list is invited, and sending a respective calendar event update message to each of the at least one affected list member for each of the ones of the calendar event records.

Advantageously, a distribution list is added to the invitee field of a calendar event record and invitations can be sent to each of the members of the distribution list. Any changes to the distribution list are detected and the calendar event records that include the distribution list in the invitee field are retrieved when a change is detected. Additional invitations including data for the respective calendar event record can be sent to new members of the distribution list and previously sent invitations can be cancelled for members removed from the distribution list. Further, the calendar event records can be updated to update invitee responses. The automatic retrieval of calendar event records and updating by sending new invitations and canceling previously sent invitations increases the speed of updating and saves user and device time, reducing power consumption and increasing battery life between charging for portable devices.

Other aspects and features will become apparent to those ordinarily skilled in the art upon review of the following description of specific embodiments in conjunction with the accompanying figures.

### BRIEF DESCRIPTION OF THE DRAWINGS

Embodiments of the present application will now be described, by way of example only, with reference to the attached Figures, wherein:
Figure 1 is a block diagram of an exemplary embodiment of a portable electronic device;
Figure 2 is an exemplary block diagram of a communication subsystem component of Figure 1;
Figure 3 is a block diagram of an exemplary implementation of a node of a wireless network;
Figure 4 is a block diagram illustrating components of an exemplary configuration of a host system that the portable electronic device can communicate with;
Figure 5 is a simplified flowchart showing steps in a method of scheduling a meeting;
Figure 6 is a simplified flowchart showing steps in a method of managing calendar event records;
Figure 7 is an exemplary screen rendered on the display device of the electronic device showing details of a calendar event record;
Figure 8 is a simplified flowchart showing steps in the method of managing calendar event records.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to portable electronic devices. Examples of portable electronic devices include mobile or handheld wireless communication devices such as pagers, cellular phones, cellular smart-phones, wireless organizers, personal digital assistants, computers, laptops, handheld wireless communication devices, wirelessly enabled notebook computers and the like.

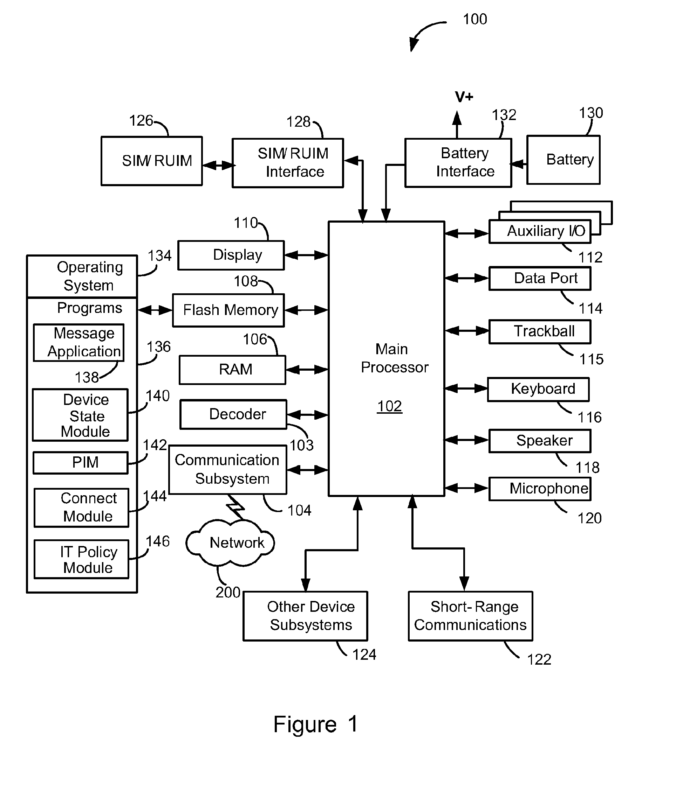

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). To aid the reader in understanding the structure of the portable electronic device and how it communicates with other devices and host systems, reference will now be made to Figures 1 through 4.

Referring first to Figure 1, shown therein is a block diagram of an exemplary embodiment of a portable electronic device 100. The portable electronic device 100 includes a number of components such as a main processor 102 that controls the overall operation of the portable electronic device 100. Communication functions, including data and voice communications, are performed through a communication subsystem 104. Data received by the portable electronic device 100 can be decompressed and decrypted by a decoder 103, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 104 receives messages from and sends messages to a wireless network 200. In this exemplary embodiment of the portable electronic device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with portable electronic device 100 is a GSM/GPRS wireless network in one exemplary implementation, other wireless networks may also be associated with the portable electronic device 100 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and third-generation (3G) networks such as EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems. The main processor 102 also interacts with additional subsystems such as a Random Access Memory (RAM) 106, a flash memory 108, a display 110, an auxiliary input/output (I/O) subsystem 112, a data port 114, a trackball 115, a keyboard 116, a speaker 118, a microphone 120, short-range communications 122 and other device subsystems 124.

Some of the subsystems of the portable electronic device 100 perform communication-related functions, whereas other subsystems may provide "resident" or on-device functions. By way of example, the display 110, the trackball 115 and the keyboard 116 may be used for both communication-related functions, such as entering a text message for transmission over the network 200, and device-resident functions such as a calculator or task list.

The portable electronic device 100 can send and receive communication signals over the wireless network 200 after network registration or activation procedures have been completed. Network access is associated with a subscriber or user of the portable electronic device 100. To identify a subscriber, a SIM/RUIM card 126 (i.e. Subscriber Identity Module or a Removable User Identity Module) is inserted into a SIM/RUIM interface 128 in order to communicate with a network. The SIM/RUIM card 126 is a type of a conventional "smart card" that can be used to identify a subscriber of the portable electronic device 100 and to personalize the portable electronic device 100, among other things. In the present embodiment, the portable electronic device 100 is not fully operational for communication with the wireless network 200 without the SIM/RUIM card 126. By inserting the SIM/RUIM card 126 into the SIM/RUIM interface 128, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber Identity (IMSI). An advantage of using the SIM/RUIM card 126 is that a subscriber is not necessarily bound by any single physical portable electronic device. The SIM/RUIM card 126 may store additional subscriber information for a portable electronic device as well, including datebook (or calendar) information and recent call information. Alternatively, user identification information can also be programmed into the flash memory 108.

The portable electronic device 100 is a battery-powered device and includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the portable electronic device 100. Although current technology makes use of a battery, future technologies such as micro fuel cells may provide the power to the portable electronic device 100.

The portable electronic device 100 also includes an operating system 134 and software components 136 which are described in more detail below. The operating system 134 and the software components 136 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136, such as specific device applications, or parts thereof, may be temporarily loaded into a volatile store such as the RAM 106. Other software components can also be included, as is well known to those skilled in the art.

The subset of software components 136 that control basic device operations, including data and voice communication applications are installed on the portable electronic device 100 during its manufacture. Other software applications include a message application 138 that can be any suitable software program that allows a user of the portable electronic device 100 to send and receive electronic messages. Various alternatives exist for the message application 138 as is well known to those skilled in the art. Messages that have been sent or received by the user are typically stored in the flash memory 108 of the portable electronic device 100 or some other suitable storage element in the portable electronic device 100. In at least some embodiments, some of the sent and received messages may be stored remotely from the device 100 such as in a data store of an associated host system that the portable electronic device 100 communicates with.

The software components can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the portable electronic device 100 is turned off or loses power.

The PIM 142 includes functionality for organizing and managing data items of interest to the user, such as, but not limited to, e-mail, contacts, calendar event records, voice mails, appointments, and task items. PIM applications include, for example, calendar, address book, tasks and memo applications. The PIM applications have the ability to send and receive data items via the wireless network 200. PIM data items may be seamlessly integrated, synchronized, and updated via the wireless network 200 with the portable electronic device subscriber's corresponding data items stored and/or associated with a host computer system. This functionality creates a mirrored host computer on the portable electronic device 100 with respect to such items. This can be particularly advantageous when the host computer system is the portable electronic device subscriber's office computer system.

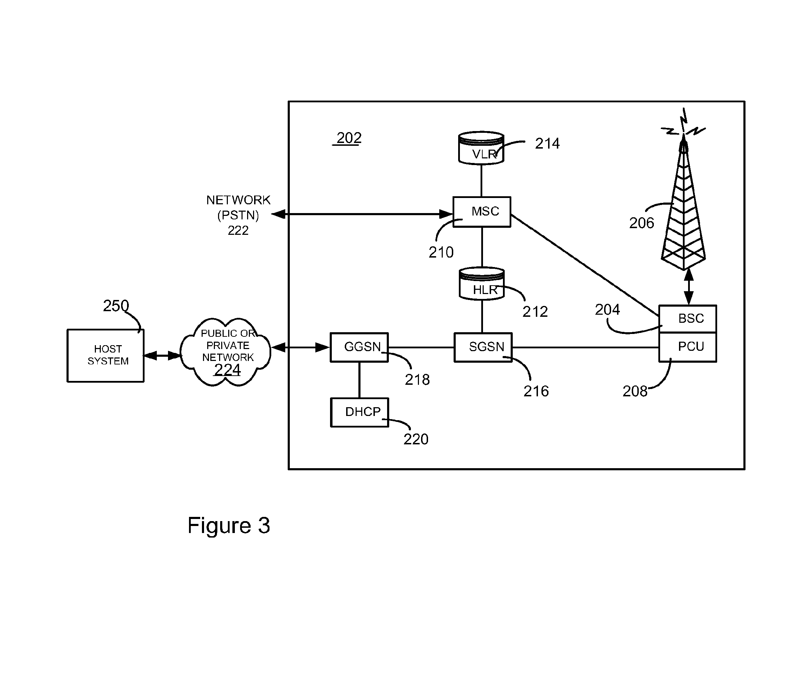

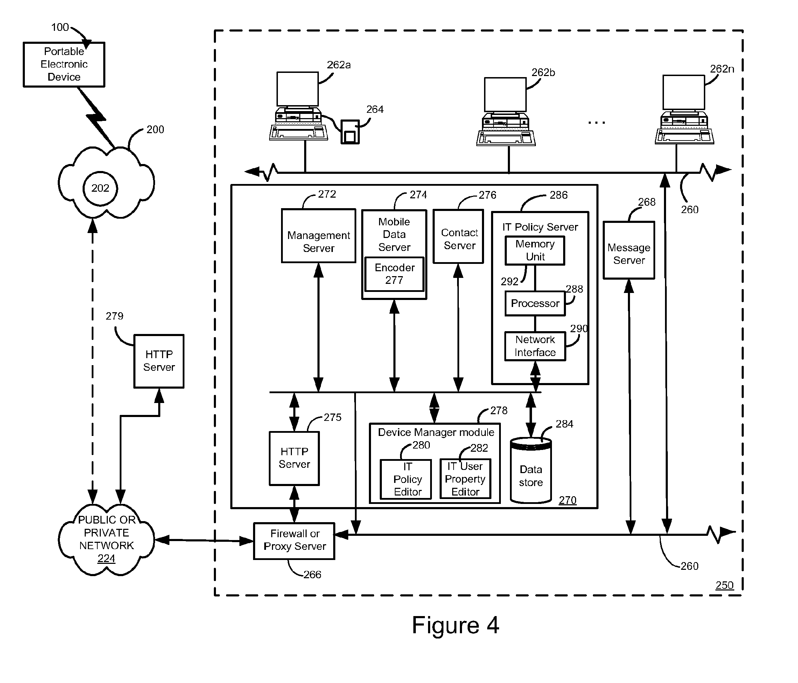

The software components 136 also includes a connect module 144, and an information technology (IT) policy module 146. The connect module 144 implements the communication protocols that are required for the portable electronic device 100 to communicate with the wireless infrastructure and any host system, such as an enterprise system, that the portable electronic device 100 is authorized to interface with. Examples of a wireless infrastructure and an enterprise system are given in Figures 3 and 4, which are described in more detail below.

The connect module 144 includes a set of APIs that can be integrated with the portable electronic device 100 to allow the portable electronic device 100 to use any number of services associated with the enterprise system. The connect module 144 allows the portable electronic device 100 to establish an end-to-end secure, authenticated communication pipe with the host system. A subset of applications for which access is provided by the connect module 144 can be used to pass IT policy commands from the host system to the portable electronic device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be provided on the portable electronic device 100 and still others can be installed on the portable electronic device 100. Such software applications can be third party applications, which are added after the manufacture of the portable electronic device 100. Examples of third party applications include games, calculators, utilities, etc.

The additional applications can be loaded onto the portable electronic device 100 through at least one of the wireless network 200, the auxiliary I/O subsystem 112, the data port 114, the short-range communications subsystem 122, or any other suitable device subsystem 124. This flexibility in application installation increases the functionality of the portable electronic device 100 and may provide enhanced on-device functions, communication-related functions, or both. For example, secure communication applications may enable electronic commerce functions and other such financial transactions to be performed using the portable electronic device 100.

The data port 114 enables a subscriber to set preferences through an external device or software application and extends the capabilities of the portable electronic device 100 by providing for information or software downloads to the portable electronic device 100 other than through a wireless communication network. The alternate download path may, for example, be used to load an encryption key onto the portable electronic device 100 through a direct and thus reliable and trusted connection to provide secure device communication.

The data port 114 can be any suitable port that enables data communication between the portable electronic device 100 and another computing device. The data port 114 can be a serial or a parallel port. In some instances, the data port 114 can be a USB port that includes data lines for data transfer and a supply line that can provide a charging current to charge the battery 130 of the portable electronic device 100.

The short-range communications subsystem 122 provides for communication between the portable electronic device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, Web page download, or any other information is processed by the communication subsystem 104 and input to the main processor 102. The main processor 102 will then process the received signal for output to the display 110 or alternatively to the auxiliary I/O subsystem 112. A subscriber may also compose data items, such as e-mail messages, for example, using the keyboard 116 in conjunction with the display 110 and possibly the auxiliary I/O subsystem 112. The auxiliary subsystem 112 may include devices such as: a touch screen, mouse, track ball, infrared fingerprint detector, or a roller wheel with dynamic button pressing capability. The keyboard 116 is preferably an alphanumeric keyboard and/or telephone-type keypad. However, other types of keyboards may also be used. A composed item may be transmitted over the wireless network 200 through the communication subsystem 104.

For voice communications, the overall operation of the portable electronic device 100 is substantially similar, except that the received signals are output to the speaker 118, and signals for transmission are generated by the microphone 120. Alternative voice or audio I/O subsystems, such as a voice message recording subsystem, can also be implemented on the portable electronic device 100. Although voice or audio signal output is accomplished primarily through the speaker 118, the display 110 can also be used to provide additional information such as the identity of a calling party, duration of a voice call, or other voice call related information.

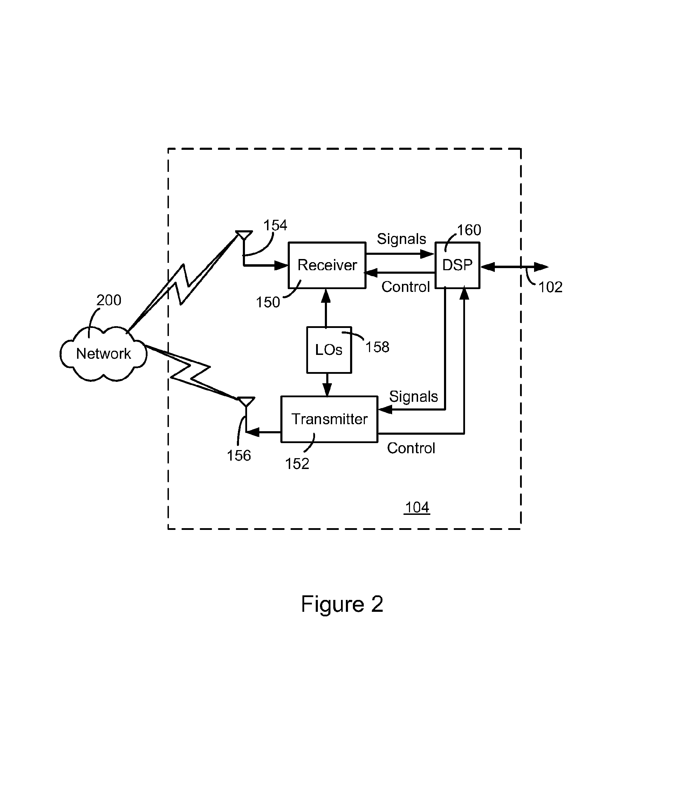

Referring now to Figure 2, an exemplary block diagram of the communication subsystem component 104 is shown. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the portable electronic device 100 is intended to operate. Thus, it should be understood that the design illustrated in Figure 2 serves only as one example.

Signals received by the antenna 154 through the wireless network 200 are input to the receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 may be adaptively controlled through automatic gain control algorithms implemented in the DSP 160.

The wireless link between the portable electronic device 100 and the wireless network 200 can contain one or more different channels, typically different RF channels, and associated protocols used between the portable electronic device 100 and the wireless network 200. An RF channel is a limited resource that should be conserved, typically due to limits in overall bandwidth and limited battery power of the portable electronic device 100.

When the portable electronic device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

Referring now to Figure 3, a block diagram of an exemplary implementation of a node 202 of the wireless network 200 is shown. In practice, the wireless network 200 comprises one or more nodes 202. In conjunction with the connect module 144, the portable electronic device 100 can communicate with the node 202 within the wireless network 200. In the exemplary implementation of Figure 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable portable electronic devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the portable electronic device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from portable electronic devices within its cell via the station 206. The fixed transceiver equipment normally performs such functions as modulation and possibly encoding and/or encryption of signals to be transmitted to the portable electronic device 100 in accordance with particular, usually predetermined, communication protocols and parameters, under control of its controller. The fixed transceiver equipment similarly demodulates and possibly decodes and decrypts, if necessary, any communication signals received from the portable electronic device 100 within its cell. Communication protocols and parameters may vary between different nodes. For example, one node may employ a different modulation scheme and operate at different frequencies than other nodes.

For all portable electronic devices 100 registered with a specific network, permanent configuration data such as a user profile is stored in the HLR 212. The HLR 212 also contains location information for each registered portable electronic device and can be queried to determine the current location of a portable electronic device. The MSC 210 is responsible for a group of location areas and stores the data of the portable electronic devices currently in its area of responsibility in the VLR 214. Further, the VLR 214 also contains information on portable electronic devices that are visiting other networks. The information in the VLR 214 includes part of the permanent portable electronic device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each portable electronic device 100. The SGSN 216 also performs security functions and access control for data traffic on the wireless network 200. The GGSN 218 provides internetworking connections with external packet switched networks and connects to one or more SGSN's 216 via an Internet Protocol (IP) backbone network operated within the network 200. During normal operations, a given portable electronic device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a portable electronic device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each portable electronic device 100 must be assigned to one or more APNs and portable electronic devices 100 cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a portable electronic device 100 is not using its PDP Context, the PDP Context can be de-allocated and the IP address returned to the IP address pool managed by the DHCP server 220.

Referring now to Figure 4, shown therein is a block diagram illustrating components of an exemplary configuration of a host system 250 that the portable electronic device 100 can communicate with in conjunction with the connect module 144. The host system 250 will typically be a corporate enterprise or other local area network (LAN), but may also be a home office computer or some other private system, for example, in variant implementations. In this example shown in Figure 4, the host system 250 is depicted as a LAN of an organization to which a user of the portable electronic device 100 belongs. Typically, a plurality of portable electronic devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's portable electronic device 100 is situated on a LAN connection. The cradle 264 for the portable electronic device 100 can be coupled to the computer 262a by a serial or a Universal Serial Bus (USB) connection, for example. Other user computers 262b-262n are also situated on the network 260, and each may or may not be equipped with an accompanying cradle 264. The cradle 264 facilitates the loading of information (e.g. PIM data, private symmetric encryption keys to facilitate secure communications) from the user computer 262a to the portable electronic device 100, and may be particularly useful for bulk information updates often performed in initializing the portable electronic device 100 for use. The information downloaded to the portable electronic device 100 may include certificates used in the exchange of messages.

It will be understood by persons skilled in the art that the user computers 262a-262n will typically also be connected to other peripheral devices, such as printers, etc. which are not explicitly shown in Figure 4. Furthermore, only a subset of network components of the host system 250 are shown in Figure 4 for ease of exposition, and it will be understood by persons skilled in the art that the host system 250 will comprise additional components that are not explicitly shown in Figure 4 for this exemplary configuration. More generally, the host system 250 may represent a smaller part of a larger network (not shown) of the organization, and may comprise different components and/or be arranged in different topologies than that shown in the exemplary embodiment of Figure 4.

To facilitate the operation of the portable electronic device 100 and the wireless communication of messages and message-related data between the portable electronic device 100 and components of the host system 250, a number of wireless communication support components 270 can be provided. In some implementations, the wireless communication support components 270 can include a management server 272, a mobile data server (MDS) 274, a web server, such as Hypertext Transfer Protocol (HTTP) server 275, a contact server 276, and a device manager module 278. HTTP servers can also be located outside the enterprise system, as indicated by the HTTP server 275 attached to the network 224. The device manager module 278 includes an IT Policy editor 280 and an IT user property editor 282, as well as other software components for allowing an IT administrator to configure the portable electronic devices 100. In an alternative embodiment, there may be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the portable electronic devices 100. The memory unit 292 can store functions used in implementing the IT policy as well as related data. Those skilled in the art know how to implement these various components. Other components may also be included as is well known to those skilled in the art. Further, in some implementations, the data store 284 can be part of any one of the servers.

In this exemplary embodiment, the portable electronic device 100 communicates with the host system 250 through node 202 of the wireless network 200 and a shared network infrastructure 224 such as a service provider network or the public Internet. Access to the host system 250 may be provided through one or more routers (not shown), and computing devices of the host system 250 may operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the portable electronic device 100. The wireless VPN router allows a VPN connection to be established directly through a specific wireless network to the portable electronic device 100. The wireless VPN router can be used with the Internet Protocol (IP) Version 6 (IPV6) and IP-based wireless networks. This protocol can provide enough IP addresses so that each portable electronic device has a dedicated IP address, making it possible to push information to a portable electronic device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the portable electronic device 100 in this alternative implementation.

Messages intended for a user of the portable electronic device 100 are initially received by a message server 268 of the host system 250. Such messages may originate from any number of sources. For instance, a message may have been sent by a sender from the computer 262b within the host system 250, from a different portable electronic device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some exemplary implementations of the message server 268 include a Microsoft Exchange™ server, a Lotus Domino™server, a Novell Groupwise™server, or another suitable mail server installed in a corporate environment. In some implementations, the host system 250 may comprise multiple message servers 268. The message server provides additional functions including PIM functions such as calendaring, contacts and tasks and supports data storage.

When messages are received by the message server 268, they are typically stored in a data store associated with the message server 268. In at least some embodiments, the data store may be a separate hardware unit, such as data store 284, that the message server 268 communicates with. Messages can be subsequently retrieved and delivered to users by accessing the message server 268. For instance, an e-mail client application operating on a user's computer 262a may request the e-mail messages associated with that user's account stored on the data store associated with the message server 268. These messages are then retrieved from the data store and stored locally on the computer 262a. The data store associated with the message server 268 can store copies of each message that is locally stored on the portable electronic device 100. Alternatively, the data store associated with the message server 268 can store all of the messages for the user of the portable electronic device 100 and only a smaller number of messages can be stored on the portable electronic device 100 to conserve memory. For instance, the most recent messages (i.e. those received in the past two to three months for example) can be stored on the portable electronic device 100.

When operating the portable electronic device 100, the user may wish to have e-mail messages retrieved for delivery to the portable electronic device 100. The message application 138 operating on the portable electronic device 100 may also request messages associated with the user's account from the message server 268. The message application 138 may be configured (either by the user or by an administrator, possibly in accordance with an organization's IT policy) to make this request at the direction of the user, at some pre-defined time interval, or upon the occurrence of some pre-defined event. In some implementations, the portable electronic device 100 is assigned its own e-mail address, and messages addressed specifically to the portable electronic device 100 are automatically redirected to the portable electronic device 100 as they are received by the message server 268.

The management server 272 can be used to specifically provide support for the management of, for example, messages, such as e-mail messages, that are to be handled by portable electronic devices. Generally, while messages are still stored on the message server 268, the management server 272 can be used to control when, if, and how messages are sent to the portable electronic device 100. The management server 272 also facilitates the handling of messages composed on the portable electronic device 100, which are sent to the message server 268 for subsequent delivery.

For example, the management server 272 may monitor the user's "mailbox" (e.g. the message store associated with the user's account on the message server 268) for new e-mail messages, and apply user-definable filters to new messages to determine if and how the messages are relayed to the user's portable electronic device 100. The management server 272 may also, through an encoder 273, compress messages, using any suitable compression technology (e.g. YK compression, and other known techniques) and encrypt messages (e.g. using an encryption technique such as Data Encryption Standard (DES), Triple DES, or Advanced Encryption Standard (AES)), and push them to the portable electronic device 100 via the shared network infrastructure 224 and the wireless network 200. The management server 272 may also receive messages composed on the portable electronic device 100 (e.g. encrypted using Triple DES), decrypt and decompress the composed messages, re-format the composed messages if desired so that they will appear to have originated from the user's computer 262a, and reroute the composed messages to the message server 268 for delivery.

Certain properties or restrictions associated with messages that are to be sent from and/or received by the portable electronic device 100 can be defined (e.g. by an administrator in accordance with IT policy) and enforced by the management server 272. These may include whether the portable electronic device 100 may receive encrypted and/or signed messages, minimum encryption key sizes, whether outgoing messages must be encrypted and/or signed, and whether copies of all secure messages sent from the portable electronic device 100 are to be sent to a pre-defined copy address, for example.

The management server 272 may also be adapted to provide other control functions, such as only pushing certain message information or pre-defined portions (e.g. "blocks") of a message stored on the message server 268 to the portable electronic device 100. For example, in some cases, when a message is initially retrieved by the portable electronic device 100 from the message server 268, the management server 272 may push only the first part of a message to the portable electronic device 100, with the part being of a pre-defined size (e.g. 2 KB). The user can then request that more of the message be delivered in similar-sized blocks by the management server 272 to the portable electronic device 100, possibly up to a maximum pre-defined message size. Accordingly, the management server 272 facilitates better control over the type of data and the amount of data that is communicated to the portable electronic device 100, and can help to minimize potential waste of bandwidth or other resources.

The mobile data server (MDS) 274 encompasses any other server that stores information that is relevant to the corporation. The mobile data server 274 may include, but is not limited to, databases, online data document repositories, customer relationship management (CRM) systems, or enterprise resource planning (ERP) applications. The MDS 274 can also connect to the Internet or other public network, through HTTP server 275 or other suitable web server such as an File Transfer Protocol (FTP) server, to retrieve HTTP webpages and other data. Requests for webpages are typically routed through MDS 274 and then to HTTP server 275, through suitable firewalls and other protective mechanisms. The web server then retrieves the webpage over the Internet, and returns it to MDS 274. As described above in relation to management server 272, MDS 274 is typically provided, or associated, with an encoder 277 that permits retrieved data, such as retrieved webpages, to be compressed, using any suitable compression technology (e.g. YK compression, and other known techniques), and encrypted (e.g. using an encryption technique such as DES, Triple DES, or AES), and then pushed to the portable electronic device 100 via the shared network infrastructure 224 and the wireless network 200.

The contact server 276 can provide information for a list of contacts for the user in a similar fashion as the address book on the portable electronic device 100. Accordingly, for a given contact, the contact server 276 can include the name, phone number, work address and e-mail address of the contact, among other information. The contact server 276 can also provide a global address list that contains the contact information for all of the contacts associated with the host system 250.

It will be understood by persons skilled in the art that the management server 272, the MDS 274, the HTTP server 275, the contact server 276, the device manager module 278, the data store 284 and the IT policy server 286 do not need to be implemented on separate physical servers within the host system 250. For example, some or all of the functions associated with the management server 272 may be integrated with the message server 268, or some other server in the host system 250. Alternatively, the host system 250 may comprise multiple management servers 272, particularly in variant implementations where a large number of portable electronic devices need to be supported.

The device manager module 278 provides an IT administrator with a graphical user interface with which the IT administrator interacts to configure various settings for the portable electronic devices 100. As mentioned, the IT administrator can use IT policy rules to define behaviors of certain applications on the portable electronic device 100 that are permitted such as phone, web browser or Instant Messenger use. The IT policy rules can also be used to set specific values for configuration settings that an organization requires on the portable electronic devices 100 such as auto signature text, WLAN/VoIP/VPN configuration, security requirements (e.g. encryption algorithms, password rules, etc.), specifying themes or applications that are allowed to run on the portable electronic device 100, and the like.

As indicated above, the portable electronic device 100 includes the Personal Information Manager (PIM) 142 that includes functionality for organizing and managing data items of interest to the user, such as, but not limited to, e-mail, contacts, calendar event records, voice mails, appointments, and task items. PIM applications include, for example, calendar, address book, tasks and memo applications.

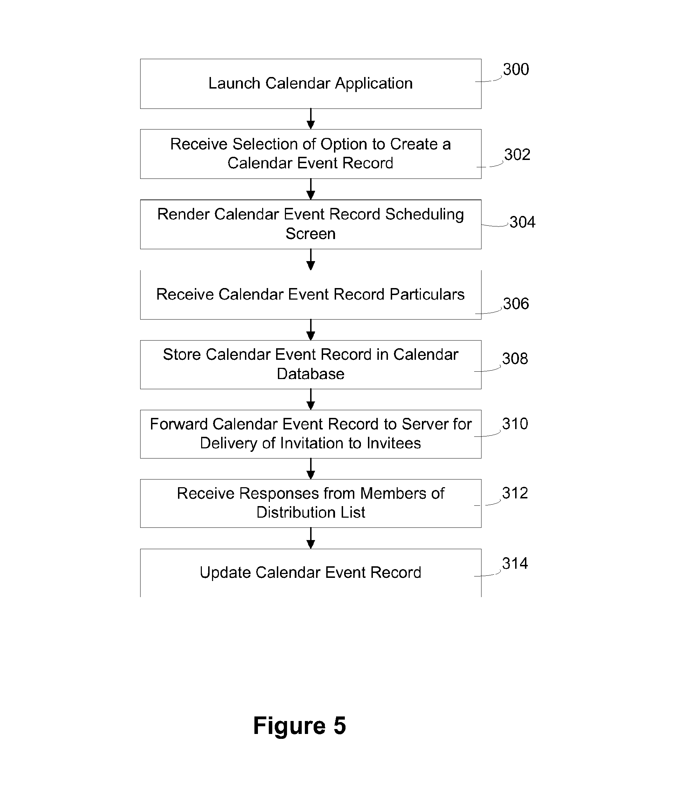

Referring now to Figure 5, there is provided a simplified flowchart showing steps in a method of managing calendar event records. It will be appreciated that each of the steps of Figure 5 is carried out by routines or subroutines of the software executed by the main processor 102 and a processor or processors at the host system 250. Coding of software for carrying out such steps is well within the scope of a person of ordinary skill in the art having regard to the present description.

The calendar application is executed by the processor 102 (step 300). A calendar view is displayed on the LCD display 110 of the portable electronic device 100, such as a default calendar view showing calendar event records that have a start and/or an end time that falls within a set of time constraints that depend on the default calendar view. The calendar event records that fall within the time constraints are retrieved and displayed in the calendar user interface, also referred to herein as a calendar view.

From the calendar view, the user of the portable electronic device 100 can select an option to create a new calendar event record which is received at the processor 102 at step 302. In response to receipt of a selection to create a new calendar event record, a calendar event scheduling user interface is provided (step 304) via the LCD display 110 for user entry of particulars of the calendar event. The calendar event particulars are received upon user entry at step 306. The calendar event particulars include, for example, a start time, an end time and an identification of invitees to the meeting, which are entered using the calendar user interface. Upon completion of entry of the calendar event particulars, a save option can be selected to store the calendar event record. The calendar event record is stored in the flash memory 108 of the portable electronic device 100 (step 308) and is forwarded on to the host computer system 250 (step 310), for delivery to the message server 268 for storage in a calendar database in the data store 284, for example, and for sending an invitation to each of the included invitees.

Each invitee may, for example, accept the invitation, decline the invitation or mark as tentative by selecting an appropriate option upon receipt of the invitation. It will be appreciated that invitees may also choose not to respond. Invitee responses are received at the host computer system 250, for example, at the message server 268 for storage with the calendar event record in the respective calendar database in the data store 284. The responses are also forwarded to the portable electronic device 100 and the calendar event record is updated at the portable electronic device 100 to track the invitee status (step 314).

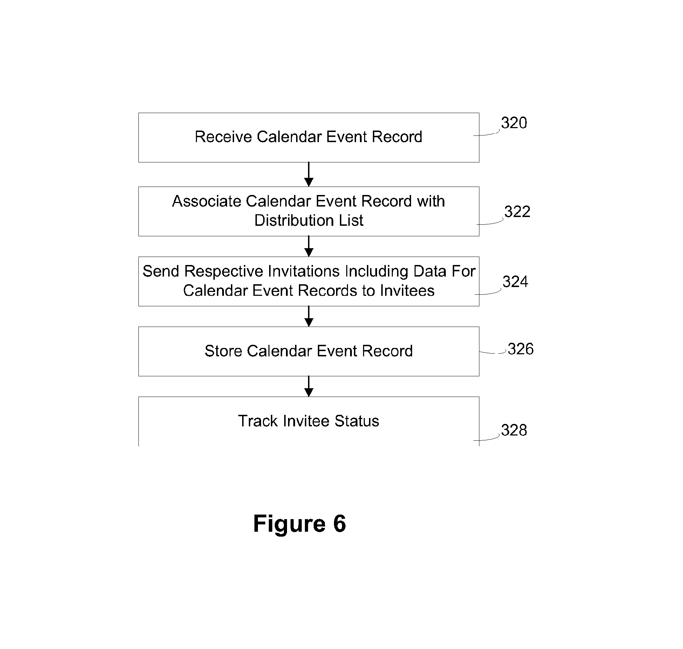

Referring now to Figure 6, a simplified flowchart shows steps in a method of managing calendar event records. The steps shown in Figure 6 are carried out at the host computer system 250 upon receipt of a calendar event record as forwarded from, for example, the portable electronic device 100 at step 310. It will be appreciated that each of the steps of Figure 6 is carried out by routines or subroutines of software. Coding of software for carrying out such steps is well within the scope of a person of ordinary skill in the art having regard to the present description.

The calendar event record is received at the message server 268 from, for example, the portable electronic device 100 (step 320). The calendar event record is determined to be a meeting request with a distribution list in the invited field and an association is created between the calendar event record and the distribution list (step 322). The association can be created, for example, by storing the unique identifier for the calendar event record with the distribution list. The members of the distribution list are determined by matching the distribution list to a member list and calendar event record invitations including data for the calendar event record are sent to each of the invitees which includes all of the members of the distribution list (step 324). The calendar event record is stored in a calendar database in the data store 284, for example (step 326) and invitee responses are tracked by storing the status from each of the invitee responses in the calendar event record stored in the calendar database in the data store 284 (step 328). The invitee responses are also sent to the portable electronic device 100 for updating the calendar event record to track the invitee status as indicated above with reference to step 314.

Reference is now made to Figures 5, 6 and 7 to describe an example of a method of managing calendar event records. It will be appreciated that the following example is provided for the purpose of illustration only and is not intended to be limiting.

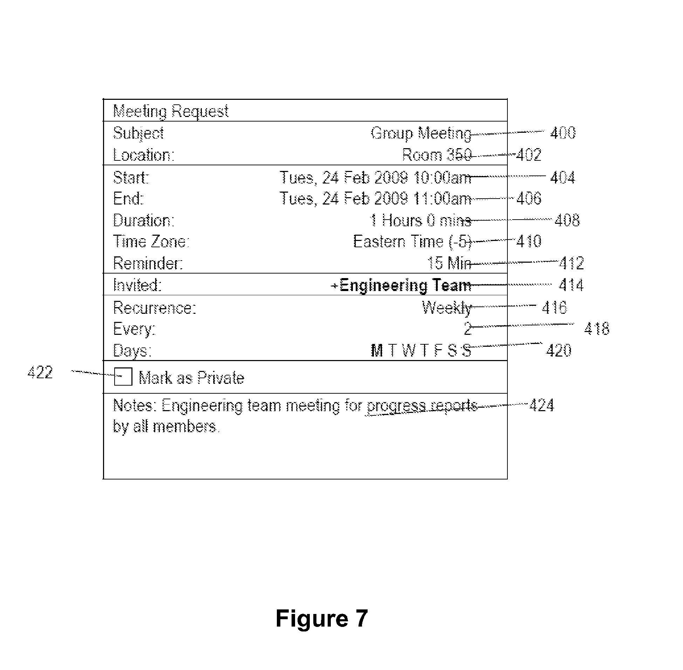

Figure 7 shows an example of a screen shot in of a calendar event scheduling user interface.

As described hereinabove, the calendar application is executed by the processor 102, thereby launching the calendar application and providing a calendar user interface via the LCD display 110 (step 300). The calendar application can be launched in response to user-selection of the calendar application from, for example, a menu screen on the LCD display 110 by user rolling of the trackball 115 to highlight a calendar application option, followed by user depression of the trackball 115 to select the application. Alternatively, the calendar application can be launched on start-up of the portable electronic device 100 or can be launched in response to other user inputs. The calendar user interface can provide any suitable calendar view on the LCD display 110. For example, a default calendar view can be provided, such as a day view of the current day according to an internal clock of the portable electronic device, a week view of the current week, a month view of the current month or an agenda view showing a list of calendar event records. The calendar event records that fall within time constraints, based on the calendar view, are retrieved and displayed. For example, in the day view, the calendar event records that fall within the displayed day are retrieved and displayed in the calendar user interface.

The option to create a new calendar event record can then be selected by, for example, user-selection of a "new" option from a submenu provided upon user-depression of the trackball 115. Many other user-selectable options can be provided in the submenu. In response, the calendar event scheduling user interface is provided at step 304 for user-entry of calendar event particulars which are received at the processor at step 306. An example of a calendar event scheduling user interface is shown in Figure 7. In the example of Figure 7, several fields are available for user-entry of calendar event particulars, including a "Subject" field 400, a "Location" field 402, a "Start" field 404, an "End" field 406, a "Duration" field 408, a "Time Zone" field 410, a "Reminder" field 412, an "Invited" field 414, a "Recurrence Field" 416, a frequency field ("Every") 418, a "Day" field 420, a "Mark as Private" field 422 and a "Notes" field 424. It will be appreciated that the "Subject" field 400 is intended for entry of the subject of the calendar event and, in the present example, provides the subject line in any invitation sent to the invitees via electronic mail. The "Location" field 402 is provided for user-entry of the location of the meeting. The "Start" field 404 is provided for user-entry of the start time of the calendar event. The "End" field 406 is provided for user-entry of the end time of the meeting. The "Duration" field 408 is calculated based on the "Start" field 404 and the "End" field 406 data. Alternatively, the "Duration field 408 can be entered and the "End" field 406 determined based on the "Start" field 404 and the "Duration" field 408 data. The "Time Zone" field 410 is provided for user-selection of an appropriate time zone. The "Reminder" field 412 is provided for user-entry of a period of time for a reminder of the calendar event. Any suitable reminder can be provided to the user in advance of the calendar determined by the period of time in the "Reminder" field 412. Thus, in the example of Figure 7, a reminder is set to be provided 15 minutes prior to the calendar event. The "Invited" field 414 includes all user-entered invitees to the meeting. In addition to entering individuals into the "Invited" field 414, a distribution list can be entered. Such a distribution list can be created and maintained at the host computer system 250, for example, using known techniques. Other invitees can also be included. Maintenance of the distribution list may include, for example, adding or subtracting members. Further invitees can be added by, for example, selection of an "Add Invitee" option from a submenu list of options provided upon depression of the trackball 115 from the screen shown in Figure 7. The "Recurrence Field" 416, frequency field ("Every") 418, and "Day" field 420, together permit scheduling of recurring instances of the calendar events and define the frequency and day that the recurring instances of the calendar events are scheduled. The "Mark as Private" field 422 is provided for user-selection for private calendar events, the details of which are not shared with others. The "Notes" field 424 is provided for user entry of any notes such as special instructions for meeting preparation, special phone numbers and codes for entry into a teleconference meeting, or any other suitable information.

In the example of Figure 7, calendar event particulars including the invitees are entered in the appropriate fields using, for example, the trackball 115 and the keyboard 116 at step 306. The invitees including a distribution list or distribution lists can be added by any suitable method such as typing email addresses into the "Invited" field 414, looking up invitees from the contact server 276 using a global address lookup for contacts associated with the host system 250, or by selection of invitees from the contacts listed in the address book stored at the portable electronic device 100. In the present example, a single distribution list entitled "Engineering Team" is included in the "Invited" field 414. The distribution list, "Engineering Team", can have any suitable number of members and can be maintained at the host system 250 as indicated above.

The calendar event particulars, including the distribution list, "Engineering Team", are received when the user selects an option to save the calendar event record (step 306). The calendar event record is then stored in the flash memory 108 of the portable electronic device 100 (step 308) and is forwarded on to the host computer system 250 (step 310).

The calendar event record is received at the message server 268 (step 320). The calendar event record is determined to be a meeting request with the distribution list, "Engineering Team", in the invited field and the unique identifier for the calendar record is stored with the distribution list, "Engineering Team", for identification of calendar event records that include the distribution list as an invitee in the event that changes are made to the distribution list. Thus, an association is created between the calendar event record and the distribution list (step 322). The members of the distribution list, "Engineering Team", are determined by matching the distribution list to the member list and calendar event record invitations including data for the calendar event record are sent to each of the members of the distribution list via electronic mail (step 324). The calendar event record is stored in a calendar database in the data store 284 (step 326) and invitee responses are tracked by storing the status from each of the invitee responses in the calendar event record stored in the calendar database in the data store 284 (step 328). The status of each of the members is indicated as no response received until responses are received from the members.

The invitee responses are also sent to the portable electronic device 100 for updating the calendar event record to track the status of each of the invitees in the distribution list, "Engineering Team". Again, the status of each of the members is indicated as no response received until responses are received from the members.

Responses received from the members of the distribution list, "Engineering Team", that are received at the host computer system 250 are also received at the portable electronic device 100 (step 312) and the calendar event record stored at the flash memory 108 of the portable electronic device 100 is updated to track the responses from the members of the distribution list, "Engineering Team"(step 314).

It will be appreciated that the calendar event record stored at the flash memory 108 of the portable electronic device 100 may be rendered in any suitable calendar view on the LCD display 110 of the portable electronic device 100, such as a default calendar view that includes the start and/or end time of the calendar event record. Thus, the stored calendar event record may be retrieved and displayed in any suitable calendar view.

In the above example, a calendar event record is stored in which a distribution list is included in the "Invited" field 414. It will be understood that any suitable number of calendar event records may be stored at the portable electronic device 100 and in a respective calendar database in the data store 284. Further, any suitable number of calendar event records including the same distribution list or other distribution lists may be stored at the portable electronic device 100 and at the calendar database in the data store 284.

It will be appreciated that distribution lists such as the distribution list for the Engineering Team in the above-described example, may be created and maintained at the host computer system 250, at the contact server 276, for example. Such distribution lists generally include a number of members of the group and the contact information for the members may be maintained at the contact server 276. Each distribution list may be created or maintained, adding or removing members from a list that makes up the distribution list by adding or removing contacts from the list. Thus, for example, when a new member joins a group, the contact for the new member may be added to the distribution list at the host computer system 250. Similarly, when a member leaves the group, the contact for the member may be removed from the distribution list at the host computer system 250.

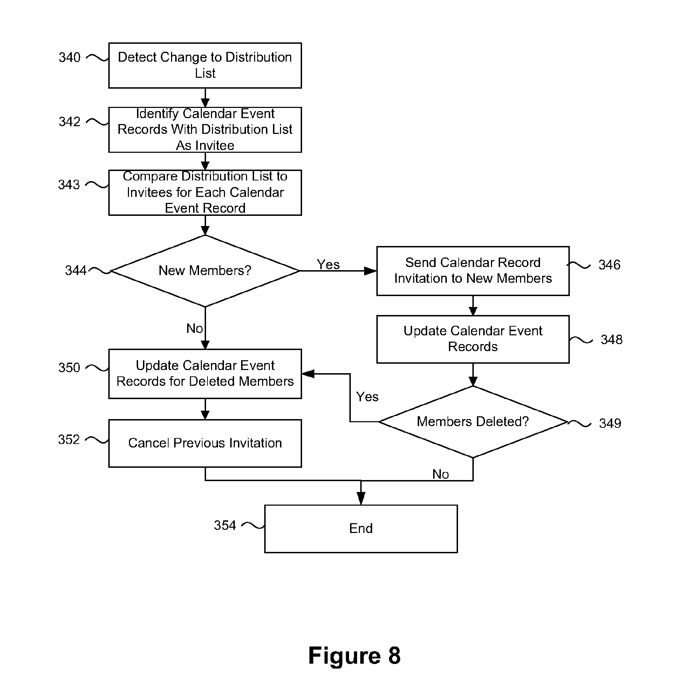

Reference is now made to Figure 8 to describe a method of managing calendar event records. A change to a distribution list is detected at step 340 and the calendar event records that include the distribution list that is changed are identified and retrieved at step 342. The new distribution list is compared to a prior list to determine the changes made (step 343) and the affected distribution list member. If the change to the distribution list includes an addition (or additions), a decision is made at step 344 to proceed to step 346. For each new member added, invitations including data for respective calendar event records retrieved at step 342 are sent via electronic mail to the electronic mail address of the new member (step 346). The calendar event records that include the distribution list as an invitee are updated at step 348 to include the status of the new member. Each calendar event record can also be updated later if and when a response is received from the new member, for example, if the new member accepts the invitation, declines the invitation or responds as tentative. If the change to the distribution list includes the deletion of a member or members a decision is made at step 349 to proceeds to step 350. Alternatively, if no new members are added, a decision is made at step 344 to proceed to step 350. For each member deleted from the distribution list, the calendar records that include the distribution list as an invitee are updated to delete the member and the status of the deleted member (step 350). The previously sent invitation to the deleted member is then canceled to remove the calendar event record from the calendar database for the deleted member (step 352). The method ends at step 354.

Continued reference is made to Figure 8 to describe one example of the method of maintaining calendar event records. In the present example, the host computer system 250 detects a change to the distribution list, such as the distribution list, "Engineering Team", referred to above (step 340). The change is detected when the distribution list is updated at the contact server 276 by, for example, an administrator of the host computer system 250.

Next, the calendar event records that include the distribution list "Engineering Team" are determined at step 340 by, for example, the unique identifiers that are stored with the distribution list. As descried above, the unique identifier for each calendar event record may be stored with the distribution list thereby associating the calendar event records that include the distribution list as an invitee with the distribution list. The calendar event records at the data store 284 that include the distribution list, "Engineering Team", as an invitee are retrieved based on the unique identifiers (step 342). For each of the calendar event records that are retrieved at step 342, the distribution list "Engineering Team", as updated at the contact server, is compared with the list of members to which calendar event record invitations including the calendar event record have been sent to determine the changes made to the distribution list, "Engineering Team" (step 343).

If the change to the distribution list includes the addition of a member (step 344), the method proceeds to step 346 where a calendar event invitation including data for the calendar event record is sent to each new member for each calendar event record retrieved at step 342. The calendar event invitations are sent by electronic mail to the new member of the distribution list, "Engineering Team", and the data for the calendar event record can be stored in a calendar database at an electronic device for the new member (step 346). Each of the calendar event records at the data store 284 that include the distribution list, "Engineering Team", as an invitee is also updated to include the status of the new member (step 348). These calendar event records are therefore each updated to indicated no response has been received from the new member until respective responses are received. Updates may also be sent to the portable electronic device 100 for similarly updating the respective calendar event records stored in the flash memory 108 for which the user of the portable electronic device is the organizer and for which the distribution list, "Engineering Team" is included as an invitee.

Continuing with the example above, an invitation for the recurring meeting created and described with reference to Figure 7 is therefore sent to the new member. The calendar event record is updated at the data store 284 to include the status of the new member and an update is automatically sent to the portable electronic device 100 for updating the calendar event record stored in the flash memory 108 with the status of the new member. Further, an electronic mail message is sent via the host computer system 250 to the portable electronic device 100 if and when the new member responds to the meeting invitation. The calendar event records at both the host computer system 250 and at the portable electronic device 100 are also updated to track the response.

If a member is deleted from the distribution list "Engineering Team", the calendar records that include the distribution list as an invitee that are identified and retrieved at step 342 are updated to remove the deleted member and the status of the deleted member (or members) (step 350). An update is also sent to the meeting organizer to similarly remove the status of the deleted member (or members). Each previously sent invitation to each removed member is then canceled to delete the respective calendar event record from the calendar databases for each deleted member (step 352). Thus, a calendar event record cancelation is sent via electronic mail to each removed member to delete the calendar event record from a computing device of the removed member.

It will now be appreciated that in the above example, the host computer system, 250 tracks the distribution lists and detects changes to the distribution lists. Further, changes to any distribution lists are determined at the host computer system 250, calendar event invitations are sent from the host computer system 250 where additions to a distribution list that is included as an invitee in a calendar event record, calendar event record cancelations are sent where deletions are made to a distribution list that is included as an invitee in a calendar event record, and updates to the calendar event records are initiated at the host computer system 250.

Reference is still made to Figure 8 to describe another example of the method of managing calendar event records. In the present example, the portable electronic device 100 of the meeting organizer (originator of the calendar event record) polls the host computer system 250 on a suitable regular basis. For example, the portable electronic device 100 may poll the host computer system 250 for any updated distribution list included as an invitee for calendar event records for which the user of the portable electronic device 100 is the organizer (or originator of the calendar event record). Thus, in the example of the calendar event record shown in Figure 7, the portable electronic device 100 polls the host computer system 250 for updates to the distribution list, "Engineering Team". Thus, the portable electronic device 100 detects that changes are made to the distribution list, "Engineering Team" by regularly polling the host computer system for any updates to the distribution list, "Engineering Team" (step 340).

Next, the calendar records for which the user of the portable electronic device 100 is the organizer and that include the distribution list, "Engineering Team", as an invitee are determined and retrieved based on the unique identifiers of the respective calendar records stored in association with the distribution list (step 342). For each calendar record identified at step 342, the processor 102 compares the updated distribution list, "Engineering Team", as received from the host computer system 250 to the list of members to which calendar event record invitations including the calendar event record have been sent to determine the changes made to the distribution list "Engineering Team" (step 343).

If the change to the distribution list includes an addition of a member (step 344), the method proceeds to step 346 where a calendar event invitation is sent to the new member (or members) for each calendar event record that includes the distribution list "Engineering Team" as an invitee. The calendar event invitations are sent by electronic mail, via the host computer system 250, to the new member of the distribution list, "Engineering Team", (step 346). Respective calendar event records may be automatically stored in a calendar database at an electronic device for the new member. The calendar event records retrieved at step 342 are also updated at the portable electronic device 100 to include the status of the new member. The calendar event records previously stored at the data store 284 are similarly updated when the invitation is sent via the host computer system 250.

Continuing with the example of the calendar event record of Figure 7, an invitation for the recurring meeting is sent to the new member. The calendar event record is updated at the portable electronic device 100 to include the status of the new member and an update is also stored at the data store 284 with the status of the new member. Further, an electronic mail message may be sent via the host computer system 250 to the portable electronic device 100 if and when the new member responds to the meeting invitation. The calendar event records at both the host computer system 250 and at the portable electronic device 100 are also updated to track the response.

If a member is deleted from the distribution list, "Engineering Team", the calendar event records that include the distribution list as an invitee that are identified and retrieved at step 342 are updated at the portable electronic device 100 to delete the status of the deleted member (or members) (step 350). Each previously sent invitation to the deleted member (or members) for the calendar event records identified and retrieved at step 342 is then canceled to delete each respective calendar event record from the calendar database for the deleted member (or members) (step 352). Thus, where a member is removed from the distribution list, "Engineering Team", the calendar event record previously stored at the portable electronic device 100 is updated to remove the deleted member and an update is sent to the host computer system 250 to remove the deleted member from the calendar event record stored in the data store 284, removing the status of the deleted member. A calendar event record cancelation is sent via the host computer system 250 for deleting the calendar event record from a computing device of the deleted member.

In the preceding description, for purposes of explanation, numerous details are set forth in order to provide a thorough understanding of the embodiments of the present application. However, it will be apparent to one skilled in the art that certain specific details are not required. In other instances, features, including functional features, are shown in block diagram form in order not to obscure the description. Further, certain Figures and features are simplified for ease of understanding and explanation. In some cases, for example, specific details are not provided as to whether the embodiments described herein are implemented as a software routine, hardware circuit, firmware, or a combination thereof. Embodiments can be represented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment. Those of ordinary skill in the art will appreciate that other instructions and operations necessary to implement the described features can also be stored on the machine-readable medium. Software running from the machine-readable medium can interface with circuitry to perform the described tasks.

While the embodiments described herein are directed to particular implementations of the electronic device and method of controlling the electronic device, the above-described embodiments are intended to be examples. It will be understood that alterations, modifications and variations may be effected without departing from the scope of the present disclosure.

## Claims

1. A computer-implemented method of managing calendar event records at a database, the method comprising:
detecting a change to a distribution list comprising at least one member, said change associated with at least one affected list member;
determining ones of the calendar event records to which the distribution list is invited; and
sending a respective calendar event update message to each of the at least one affected list member for each of the determined ones of the calendar event records.

2. The method according to claim 1, wherein the update message comprises a respective calendar event invitation, including data for the respective calendar event record, if the change added the affected list member to the distribution list.

3. The method according to claim 1 or claim 2, wherein the event update message comprises a respective cancellation of a respective previously sent calendar event record if the change deleted the affected list member from the distribution list.

4. The method according to any preceding claim, comprising updating an invitee response field for said ones of said calendar event records.

5. The method according to any preceding claim, wherein detecting the change to the distribution list comprises polling a server to determine said change.

6. The method according to any preceding claim, comprising comparing the distribution list to a previous distribution list to determine the at least one affected list member.

7. The method according to any preceding claim, wherein a respective unique identifier for each of said calendar event records, to which the distribution list is invited, is associated with the distribution list.

8. The method according to claim 7, comprising storing the distribution list with the respective unique identifier for each of the calendar event records at the database for which the distribution list is invited.

9. An electronic device comprising:
an input device;
a memory device; and
functional components including a processor connected to the memory device and the input device for executing a program stored in the memory to cause the electronic device to carry out the method of any one of the preceding claims.

10. A computer readable medium having computer-readable code embodied therein for execution by a processor at an electronic device for carrying out the method of any one of claims 1 to 8.

## Amended claims

### Amended claims in accordance with Rule 137(2) EPC.

**1.** A computer-implemented method of managing calendar event records at a database, the method comprising:
detecting a change to a distribution list when the distribution list is updated, the distribution list comprising at least one member, said change associated with at least one affected list member;
determining ones of the calendar event records to which the distribution list is invited; and
sending a respective calendar event update message to each of the at least one affected list member for each of the determined ones of the calendar event records.

**2.** The method according to claim 1, wherein the update message comprises a respective calendar event invitation, including data for the respective calendar event record, if the change added the affected list member to the distribution list.

**3.** The method according to claim 1 or claim 2, wherein the event update message comprises a respective cancellation of a respective previously sent calendar event record if the change deleted the affected list member from the distribution list.

**4.** The method according to any preceding claim, comprising updating an invitee response field for said ones of said calendar event records.

**5.** The method according to any preceding claim, comprising comparing the distribution list to a previous distribution list to determine the at least one affected list member.

**6.** The method according to any preceding claim, wherein a respective unique identifier for each of said calendar event records, to which the distribution list is invited, is associated with the distribution list.

**7.** The method according to claim 7, comprising storing the distribution list with the respective unique identifier for each of the calendar event records at the database for which the distribution list is invited.

**8.** The method according to claim 7, wherein determining ones of the calendar event records to which the distribution list is invited is based on the unique identifiers.

**9.** An electronic device (100) comprising:
an input device (112);
a memory device (106, 108); and
functional components including a processor (102) connected to the memory device (106, 108) and the input device (112) for executing a program stored in the memory (106, 108) to cause the electronic device (100) to carry out the method of any one of the preceding claims.

**10.** A computer readable medium having computer-readable code embodied therein for execution by a processor at an electronic device for carrying out the method of any one of claims 1 to 8.
